# EUROPÄISCHE PATENTSCHRIFT

(11) **EP 1 794 480 B1**
(45) Veröffentlichungstag und Bekanntmachung des Hinweises auf die Patenterteilung: **04.11.2020**
(21) Anmeldenummer: 05758417.9
(22) Anmeldetag: 17.06.2005
(51) Int. Cl.: F16H 63/36, F16H 61/28

(54) **GETRIEBEANORDNUNG MIT EINER SCHALTELEMENT-SICHERUNGSEINRICHTUNG ZUR SICHERUNG GEGEN EIN EINLEGEN MEHRERER GÄNGE EINES SCHALTGETRIEBES**
GEARBOX ARRANGEMENT WITH A GEAR-SHIFTING ELEMENT SAFETY DEVICE FOR PREVENTING THE ENGAGEMENT OF MULTIPLE GEARS OF A GEARBOX
ENSEMBLE DE TRANSMISSION AVEC UN DISPOSITIF DE SECURITE D'UN ELEMENT DE CHANGEMENT DE VITESSE POUR EMPECHER UNE SELECTION DE PLUSIEURS VITESSES

(30) Priorität: 26.06.2004 DE 102004031021
(43) Veröffentlichungstag der Anmeldung: 13.06.2007
(73) Patentinhaber: ZF Friedrichshafen AG, 88046 Friedrichshafen (DE); Dr. Ing. h.c. F. Porsche AG, 70435 Stuttgart (DE)
(72) Erfinder: JOHN, Thomas, 97529 Alitzheim (DE); KRAXNER, Dieter, 75449 Wurmberg (DE)
(74) Vertreter: ZF Friedrichshafen AG
(86) Internationale Anmeldenummer: PCT/EP2005/006505
(87) Internationale Veröffentlichungsnummer: WO 2006/000338

(56) Entgegenhaltungen:
- EP-A- 0 305 750
- EP-A- 0 748 966
- DE-A1- 2 132 736
- DE-A1- 10 347 203
- DE-A1- 19 853 584
- DE-C- 293 146
- DE-U1- 8 122 318
- GB-A- 114 712
- GB-A- 191 109 947
- US-A- 1 434 643
- US-A- 1 601 048
- US-A- 2 510 697
- US-A- 2 953 035
- US-A- 4 068 537

## Beschreibung

Die Erfindung betrifft eine Getriebeanordnung für einen Antriebstrang eines Kraftfahrzeugs, ggf. Doppelkupplungs-Getriebeanordnung oder Lastschalt-Getriebeanordnung, mit wenigstens einer Gruppe von Schaltelementen, die jeweils zum Ein- und Auslegen wenigstens eines jeweiligen Gangs der Getriebeanordnung durch Verstellung relativ zu einem Getriebeanordnungsgehäuse zwischen wenigstens einer Neutral-Stellung, in dem kein dem Schaltelement zugeordneter Gang eingelegt ist, und wenigstens einer Gang-Eingelegt-Stellung, in der ein dem Schaltelement und der Gang-Eingelegt-Stellung zugeordneter Gang eingelegt ist, betätigbar sind. Es wird in diesem Zusammenhang vor allem, aber nicht ausschließlich an so genannte Doppelkupplungsgetriebe oder Lastschaltgetriebe gedacht, die zwei unabhängig voneinander schaltbare Teilgetriebe aufweisen, mit jeweils einer Getriebeeingangswelle, denen jeweils eine Kupplungsanordnung (beispielsweise der nasslaufenden Lamellenbauart oder der trockenlaufenden Reibscheibenbauart) einer Doppelkupplung zugeordnet ist, um ein zugkraftunterbrechungsfreies Schalten zwischen einem Gang des einen Getriebeteils zu einem Gang des anderen Getriebeteils zu ermöglichen.

Ein Doppelkupplungsgetriebe kann im Prinzip als Parallelschaltung von zwei voll funktionsfähigen Schaltgetrieben, die jeweils ein Teilgetriebe des Doppelkupplungsgetriebe bilden, aufgefasst werden. Dabei wird das Motormoment über zwei Kupplungen (zwei Kupplungsanordnungen) auf die Teilgetriebe verteilt, wobei mit einem Teilgetriebe die geraden und mit dem anderen Teilgetriebe die ungeraden Gänge geschaltet werden. Um zwischen zwei Gängen zugkraftunterbrechungsfrei schalten zu können, müssen während der Kupplungsmomentenübergabe von einem zum anderen Teilgetriebe jeweils ein Gang pro Teilgetriebe eingelegt sein.

Die Erfindung bezieht sich aber auch auf einfache Schaltgetriebe, bei denen ein Schalten stets eine Unterbrechung der Zugkraft bedeutet.

Um eine sportliche Fahrcharakteristik eines entsprechenden Kraftfahrzeugs vorzusehen und auch eine schnelle Reaktion auf gefährliche Fahrsituationen zu ermöglichen, ist es erstrebenswert, dass zumindest wahlweise kurze Schaltzeiten zum Umschalten der Getriebeanordnung zwischen verschiedenen Gängen realisierbar sind. Zur Sicherung dagegen, dass fehlerhaft gleichzeitig zwei der gleichen Getriebeeingangswelle zugeordnete Getriebegänge eingelegt sind oder werden, wodurch es zur Zerstörung der Getriebeanordnung kommen könnte, müssen herkömmlich die zum Umschalten benötigten Schaltkräfte aufeinander abgestimmt an den Schaltelementen angelegt werden, dass es nicht zu einem gleichzeitigen Einlegen von zwei derartigen Gängen kommt. Dies bedingt, dass eine Mindestschaltzeit zur Vermeidung von Fehlschaltungen nicht unterschritten werden kann. Überdies ist nicht ausgeschlossen, dass im Fehlerfall, etwa bei einem Fehler in der Aktuatoranordnung oder in einer diese ansteuernden Steuereinheit, trotzdem der Fehler des gleichzeitigen Einlegens von zwei der gleichen Getriebeeingangswelle zugeordneten Gängen auftreten kann, mit entsprechenden Konsequenzen für das Getriebe und auch einer Gefährdung der Fahrsicherheit des Kraftfahrzeugs.

Im Falle eines Doppelkupplungsgetriebes sind insbesondere Mehrfach-Hochschaltungen und Mehrfach-Rückschaltungen, bei denen der Ausgangs- und der Zielgang dem gleichen Teilgetriebe zugeordnet sind und das Moment zwischenzeitlich über das andere Teilgetriebe übertragen werden muss, zeitkritisch. Es gibt bei derartigen Mehrfach-Schaltungen, wenn zugkraftunterbrechungsfrei geschaltet werden soll, wenigstens zwei Phasen, in denen jeweils zwei Gänge gleichzeitig eingelegt sind, jeweils einer in jedem Teilgetriebe. Dazwischen sollte schnellstmöglich auf dem gleichen Teilgetriebe ein Gang aus- und ein anderer Gang eingelegt werden.

US1434643 offenbart die Merkmale des Oberbegriffes des Anspruchs 1. Der Erfindung liegt demgegenüber die Aufgabe zugrunde, eine Getriebeanordnung bereitzustellen, bei der die Gefahr einer Fehlschaltung mit zwei oder mehr gleichzeitig eingelegten Gängen, die nicht gleichzeitig eingelegt sein sollen oder dürfen, zumindest reduziert ist oder/und die für sehr kurze Schaltzeiten ausgelegt ist.

Zur Lösung wenigstens einer dieser Aufgaben wird erfindungsgemäß vorgeschlagen, dass in Verbindung mit der Getriebeanordnung wenigstens eine den Schaltelementen der bzw. einer Gruppe gemeinsam zugeordnete Sicherungseinrichtung vorgesehen ist, die einen Freigabezustand einnimmt, wenn sich alle Schaltelemente in der jeweiligen Neutralstellung befinden, und die durch Verstellung eines der Schaltelemente in die oder eine Gang-Eingelegt-Stellung aus dem Freigabezustand in einen Sicherungszustand überführbar ist, in welchem die Sicherungseinrichtung das andere oder alle anderen Schaltelemente gegen ein Verstellen aus der Neutralstellung in die oder eine Gang-Eingelegt-Stellung sichert.

Die Sicherungseinrichtung wirkt einer fehlerhaften Verstellung der anderen bzw. aller anderen Schaltelemente aus der Neutralstellung in die oder eine Gang-Eingelegt-Stellung entgegen, wenn eines der Schaltelemente sich in der Gang-Eingelegt-Stellung befindet. Damit ist die Gefahr einer Fehlschaltung wie angesprochen zumindest stark reduziert, wenn nicht sogar ausgeräumt. Mittelbar sind deswegen kürzere Schaltzeiten möglich, da es auf eine bestimmte Abstimmung der zum Umschalten anzulegenden Schaltkräfte nicht mehr oder zumindest weniger ankommt.

Vorteilhaft kann die Sicherungseinrichtung im Freigabezustand die zugeordneten Schaltelemente für eine Verstellung aus der Neutralstellung in die oder eine Gang-Eingelegt-Stellung freigeben. Es wird insbesondere vorgeschlagen, dass die Sicherungseinrichtung im Freigabezustand die zugeordneten Schaltelemente für eine Verstellung aus der Neutralstellung in die oder eine Gang-Eingelegt-Stellung derart freigibt, dass nur eines der Schaltelemente in die bzw. eine Gang-Eingelegt-Stellung verstellbar ist.

Eine besonders bevorzugte Ausgestaltung zeichnet sich dadurch aus, dass in dem Verrieglungszustand das andere oder alle anderen Schaltelemente bezogen auf eine gegebene maximale Betätigungskraft gegen ein Verstellen aus der Neutralstellung in die oder eine Gang-Eingelegt-Stellung gehalten, vorzugsweise verriegelt sind. Es wird in diesem Zusammenhang vor allem an eine mechanische Formschluss-Verriegelung gedacht.

Es ist durchaus zweckmäßig, wenn die Sicherungseinrichtung im Freigabezustand die zugeordneten Schaltelemente gegen ein Verstellen aus der Neutralstellung in die oder eine Gang-Eingelegt-Stellung auf Grundlage einer eine minimale Betätigungskraft unterschreitenden Betätigungskraft sichert. Es wird in diesem Zusammenhang weiterbildend vorgeschlagen, dass in dem Freigabezustand alle zugeordneten Schaltelemente bezogen auf eine die minimale Betätigungskraft unterschreitende Betätigungskraft gegen ein Verstellen aus der Neutralstellung in die oder eine Gang-Eingelegt-Stellung gehalten, vorzugsweise verriegelt sind. Vorteilhaft kann in dem Freigabezustand die Verriegelung eines jeweiligen zugeordneten Schaltelements durch Anlegen der minimalen Betätigungskraft oder einer demgegenüber größeren Betätigungskraft (beispielsweise einer der maximalen Betätigungskraft entsprechende oder dieser angenäherte Betätigungskraft) aufhebbar sein.

Eine besonders bevorzugte Ausgestaltung zeichnet sich dadurch aus, dass durch Verstellen eines der Schaltelemente von der Neutralstellung in die oder eine Gang-Eingelegt-Stellung eine auf das andere bzw. die anderen Schaltelemente wirkende, diese(s) in der Neutralstellung haltende Haltekraft einschaltbar oder vergrößerbar ist. Eine solche Auslegung der Sicherungseinrichtung ist besonders wenig fehleranfällig, und eine entsprechende Sicherungseinrichtung kann besonders einfach mechanisch realisiert werden.

Die Sicherungseinrichtung kann demgegenüber sogar mechanisch noch einfacher ausgeführt sein, nämlich auf wenigstens einem starren, unelastischen und keiner Vorspannung unterliegenden Sicherungselement oder derartigen Sicherungselementen basieren. Im Hinblick hierauf, aber auch allgemein wird vorgeschlagen, dass die Sicherungseinrichtung wenigstens ein Sicherungselement aufweist, welches derart beweglich gelagert und dimensioniert ist, dass es bei in der Neutralstellung befindlichen Schaltelementen mit wenigstens einem der Schaltelemente in Halteeingriff steht oder bringbar ist und ein beliebiges der Schaltelemente aus der Neutralstellung in die Gang-Eingelegt-Stellung oder eine Gang-Eingelegt-Stellung verstellbar ist, wobei das Sicherungselement bei Verstellung eines jeden der Schaltelemente aus der Neutralstellung in die Gang-Eingelegt-Stellung oder eine Gang-Eingelegt-Stellung durch das aus der Neutralstellung verstellte in Halteeingriff mit dem anderen Schaltelement bzw. mit den anderen Schaltelementen gebracht wird.

Weiterbildend wird vorgeschlagen, dass der Halteeingriff ein Formschluss-Eingriff zwischen einem Eingriffsabschnitt, etwa Eingriffsende, des Sicherungselements, und einem Eingriffsabschnitt, etwa Einbuchtung in einer Fläche, des jeweiligen Schaltelements, ist.

Es wird beispielsweise daran gedacht, aber nicht beansprucht, dass das Sicherungselement (beispielsweise der angesprochene Stift oder Stößel) bei in der Neutralstellung befindlichen Schaltelementen in genau einer Richtung zwischen einem Halteeingriff mit einem ersten und einem Halteeingriff mit einem zweiten der Schaltelemente verstellbar, insbesondere linear verstellbar, ist. Im Falle des Stifts oder Stößels wird an eine lineare Verstellung des Stifts bzw. Stößels in Richtung seiner Längsachse gedacht.

Alternativ wird vorgeschlagen, aber nicht beansprucht, dass das Sicherungselement (beispielsweise die angesprochene Scheibe) bei in der Neutralstellung befindlichen Schaltelementen in mehreren Richtung zwischen einem jeweiligen Halteeingriff mit mehr als zwei Schalteelementen verstellbar, insbesondere linear verstellbar, ist. Im Falle der Scheibe wird insbesondere daran gedacht, dass lineare Verstellrichtungen vorgesehen sind, die in einer Scheibenebene liegen.

Das Sicherungselement ist bei in der Neutralstellung befindlichen Schaltelementen zwischen einem Halteeingriff mit einem ersten und einem Halteeingriff mit einem zweiten der Schaltelemente verschwenkbar Ein Schwenklager ist besonders kostengünstig bereitstellbar und sorgt für eine hohe Funktionssicherheit.

Soweit vorstehend von einem Halteeingriff die Rede ist, wird vor allem oder auch daran gedacht, dass bei in der Neutralstellung befindlichen Schaltelementen der Halteeingriff des wenigtens einen Sicherungselements mit einem jeweiligen Schaltelement ein ungesicherter, durch Verstellung des Schaltelements in Richtung zu der Gang-Eingelegt-Stellung oder einer Gang-Eingelegt-Stellung überwindbarer Eingriff ist, und dass bei einem aus der Neutralstellung in die Gang-Eingelegt-Stellung oder eine Gang-Eingelegt-Stellung verstellten Schaltelement der Halteeingriff des wenigtens einen Sicherungselements mit dem anderen Schaltelement bzw. den anderen Schaltelementen ein durch das aus der Neutralstellung verstellte Schaltelement gesicherter, zumindest auf Grundlage gegebener Betätigungskräfte nicht überwindbarer Eingriff ist.

Besonders kurze Schaltzeiten sind möglich, wenn an einem sich in der Neutralstellung befindenden Schaltelement der Gruppe eine Gangeinlege-Betätigungskraft anlegbar ist, während das andere oder ein anderes Schaltelement der Gruppe sich in der oder einer Gang-Eingelegt-Stellung befindet, wobei die Sicherungseinrichtung das eine Schaltelement entgegen der angelegten Gangeinlege-Betätigungskraft in der Neutralstellung hält, und dass durch Verstellen des anderen Schaltelements aus der Gang-Eingelegt-Stellung in die Neutralstellung unter der Wirkung einer angelegten Gangauslege-Betätigungskraft die Sicherungseinrichtung in den Freigabezustand überführbar ist, um das eine Schaltelement unter der Wirkung der angelegten Gangeinlege-Betätigungskraft aus der Neutralstellung in die oder eine Gang-Eingelegt-Stellung zu verstellen.

Entsprechend üblicher Bauarten können die Schaltelemente als Schaltstangen ausgeführt sein. Die Gruppe bzw. die jeweilige Gruppe kann zwei Schaltelemente (ggf. Schaltstangen) aufweisen. Die Gruppe bzw. die jeweilige Gruppe kann aber auch mehr als zwei Schaltelemente (ggf. Schaltstangen) aufweisen, beispielsweise drei Schaltelemente (ggf. Schaltstangen).

Zwei unabhängig voneinander betätigbare Gruppen von Schaltelementen (ggf. Schaltstangen) sind vorgesehen.

Die Erfindung stellt ferner einen Kraftfahrzeug-Antriebsstrang bereit, umfassend eine Antriebseinheit (ggf. eine Brennkraftmaschine), eine Getriebeanordnung (ggf. eine Doppelkupplungs-Getriebeanordnung oder Lastschalt-Getriebeanordnung mit zwei Gruppen von Schaltelementen) nach der Erfindung und eine Kupplungseinrichtung (ggf. Doppelkupplungseinrichtung mit zwei jeweils einer Getriebeeingangswelle und damit einer der Gruppen von Schaltelementen zugeordneten Kupplungsanordnungen) zur Momentenübertragung zwischen der Antriebseinheit und der Getriebeanordnung.

Die Erfindung wird im Folgenden anhand von in den Figuren gezeigten Ausführungsbeispielen näher erläutert.
- Fig. 1: zeigt ein Beispiel für ein einer nasslaufenden, hydraulisch betätigbaren Doppelkupplungseinrichtung und einem hydraulisch betätigbaren Doppelkupplungsgetriebe zugeordnetes Hydrauliksystem, ggf. als Teil eines erfindungsgemäßen Antriebsstrangs, mit einer über verschiedene Ventile Betätigungszylinder des Hydrauliksystems ansteuernden Steuereinheit.
- Fig. 2: zeigt in den Teilfiguren 2a) und 2b) eine nicht beanspruchte Gruppe von Schaltstangen mit einer mit den beiden Schaltstangen der Gruppe zusammenwirkenden Verriegelungs-Stößelanordnung in zwei Betätigungszuständen.
- Fig. 3: zeigt in den Teilfiguren 3a), 3b), 3c) und 3d) eine nicht beanspruchte Sequenz von Zuständen von zwei Gruppen von Schaltstangen zu je zwei Schaltstangen beim Mehrfach-Rückschalten vom sechsten Gang, der in einem Teilgetriebe eingelegt ist, zum zweiten Gang, der auf dem gleichen Teilgetriebe eingelegt ist, unter Stützung vermittels des auf dem anderen Teilgetriebe eingelegten fünften Gangs.
- Fig. 4: zeigt ein Beispiel eines eine Mehrfach-Zug-Rückschaltung entsprechend Fig. 3 umfassenden Schaltablaufs mit Drehzahlverläufen, Momentverläufen, Schaltwegverläufen und Schaltkraftverläufen über die Zeit.
- Fig. 5: zeigt ein Beispiel einer Gruppe von nicht beanspruchten drei Schaltstangen mit einem den Schaltstangen gemeinsam zugeordneten scheibenartigen Verriegelungselement aus elastischem Material.
- Fig. 6: zeigt in den Teilfiguren 6a) und 6b) in einer Darstellung entsprechend Fig. 2 eine Abwandlung der mit den nicht beanspruchten Schaltstangen zusammenwirkenden Verriegelungs-Stößelanordnung, nämlich einen starren, keiner Vorspannung unterliegenden Stößel. Diese Abwandlung kommt auch für das Ausführungsbeispiel der Fig. 3 in Betracht.
- Fig. 7: zeigt in einer Darstellung entsprechend Fig. 6 eine nicht beanspruchte Abwandlung des scheibenartigen Verriegelungselements, nämlich eine starre, unelastische Ausführung des scheibenartigen Verriegelungselements.
- Fig. 8: zeigt in einer Querschnittsansicht bzw. seitlichen Ansicht eine Gruppe von zwei Schaltstangen mit einem mit den beiden Schaltstangen zusammenwirkenden Verriegelungs-Doppelarm-Hebelelement.

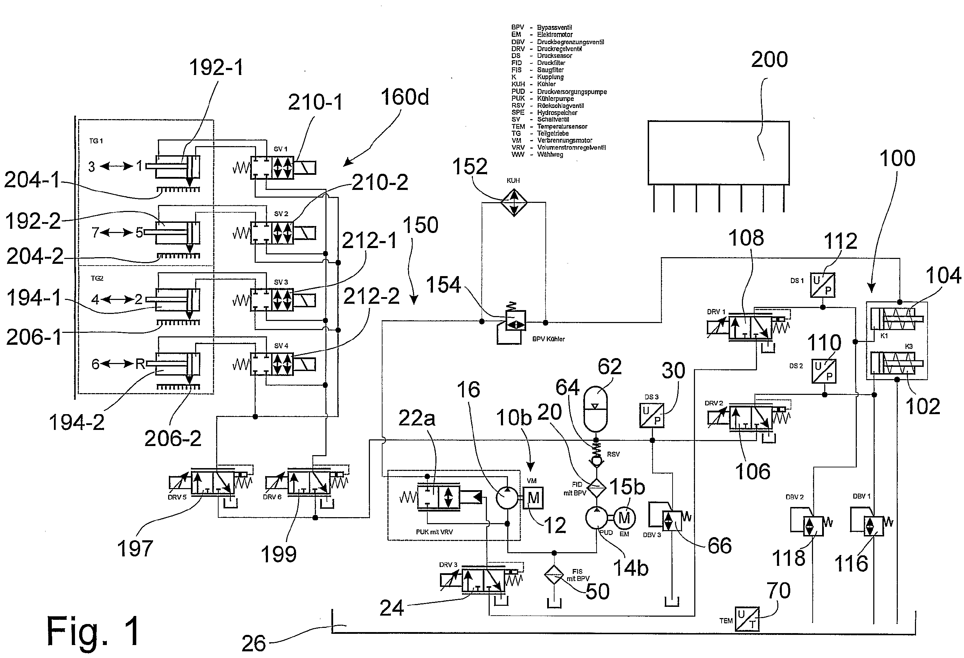

Fig. 1 entspricht bis auf eine andere Zuordnung der Gänge zu Stellungen jeweiliger Schaltstangen und eine zusätzlich angedeutete Steuereinheit der Fig. 15 der am 10.10.2003 eingereichten deutschen Patentanmeldung, Aktenzeichen 103 47 203.7, die die Prioritäten der deutschen Anmeldungen, Aktenzeichen 102 53 658.9 vom 18.11.2002, Aktenzeichen 102 53 663.5 vom 18.11.2002, Aktenzeichen 103 08 296.4 vom 26.02.2003 und Aktenzeichen 103 16 229.1 vom 09.04.2003 in Anspruch nimmt, mit dem Titel "Kraftfahrzeug-Antriebsstrang mit einer Pumpenanordnung zur Versorgung einer Kupplungseinrichtung mit Druckmedium oder/und Betriebsmedium oder/und zur Versorgung eines Getriebes mit Druckmedium, entsprechende Pumpenanordnung und entsprechende Betätigungsanordnung für die Getriebebetätigung".

Gemäß dem Ausführungsbeispiel der Fig. 1 ist eine hydraulisch betätigte Doppelkupplung 100 mit zwei Lamellen-Kupplungsanordnungen vorgesehen, die jeweils durch einen hydraulischen Nehmerzylinder 102 bzw. 104 repräsentiert sind, der zur Betätigung der jeweiligen Lamellenkupplungsanordnung im Einrücksinne dient. Den beiden hydraulischen Nehmerzylindern 102 und 104 ist jeweils ein 3/2-Wege-Druckregelventil 106 bzw. 108 zugeordnet, über das der jeweilige Nehmerzylinder gesteuert oder geregelt mit Drucköl bzw. Druck beaufschlagbar ist. Hierzu sind die Druckregelventile eingangsseitig an der Druckölversorgung der Pumpenanordnung 10b, speziell an der Druckölpumpe 14b, angeschlossen. Der von den Druckregelventilen 106 und 108 eingestellte Öldruck ist mittels eines jeweiligen Drucksensors 110 bzw. 112 erfassbar, so dass besonders zweckmäßig eine geregelte Kupplungsbetätigung realisiert sein kann. Der Drucksensor 30 dient zur Erfassung des eingangsseitigen Drucks für die Druckregelventile 106 und 108. Dieser Druck ist durch das zur Druckölpumpe 14b parallel geschaltete Druckbegrenzungsventil 66 auf einen maximal zulässigen Druck abgesichert. Ohne Beschränkung der Allgemeinheit ist die Druckölpumpe 14b durch einen Elektromotor 15b antreibbar, wohingegen eine zur Kühlölversorgung dienende Pumpe 16 durch die Brennkraftmaschine 12 des Antriebsstrangs antreibbar ist.

Die Doppelkupplung 100 wird über einen Kühlölkreislauf 150 mit von der Kühlölpumpe 16 bereitgestelltem Kühlöl versorgt. Der Kühlölkreislauf ist mit einem Ölkühler 152 ausgefüllt, zu dem ein als Bypassventil dienendes Druckbegrenzungsventil 154 parallel geschaltet ist. Der Kühlölvolumenstrom zur Doppelkupplung 100 wird vermittels eines Volumenstromregelventils 22a eingestellt, das durch ein Druckregelventil 24 vorgesteuert ist.

Das Drucköl für die Getriebebetätigung wird dem Getriebebetätigungsabschnitt 160d von der auch zur Kupplungsbetätigung dienenden Druckölpumpe 14b bereitgestellt. Um der Gefahr eines Abfalls des Betätigungsdrucks für die Kupplungseinrichtung zu begegnen, ist zweckmäßig ein Hydrospeicher in Form des Druckspeichers 62 vorgesehen.

Das Ausführungsbeispiel bezieht sich auf ein Sieben-Gang-Getriebe (mit Rückwärtsgang ein Acht-Gang-Getriebe). Die acht Gänge sind auf zwei Teilgetriebe aufgeteilt. Die ungeraden Getriebegänge werden durch ein erstes Teilgetriebe und die geraden Getriebegänge werden durch ein zweites Teilgetriebe realisiert. Die beiden Teilgetriebe weisen jeweils zwei Schaltstangen auf, die zwei jeweils einem Gang zugeordnete Gang-Eingelegt-Stellungen und dazwischen eine Neutralstellung aufweisen. Alle vier Schaltstangen des Getriebes, also jeweils alle beide Schaltstangen der beiden Teilgetriebe, sind durch einen eigenen doppelt wirkenden Nehmerzylinder 192-1 bzw. 192-2 für das erste Teilgetriebe und 194-1 bzw. 194-2 für das zweite Teilgetriebe betätigbar. Der Druck für die Betätigung der Schaltstangen vermittels der angesprochenen doppelt wirkenden Nehmerzylinder wird betreffend die eine Schaltrichtung von einem vorzugsweise als Proportionalventil ausgeführten 3/2-Wege-Druckregelventil 197 und betreffend die andere Schaltrichtung von einem vorzugsweise als Proportionalventil ausgeführten 3/2-Wege-Druckregelventil 199 bereitgestellt. Die vier Nehmerzylinder 192-1, 192-2, 194-1 und 194-2 sind über ein jeweiliges 4/2-Wege-Schaltventil 210-1, 210-2, 212-1 und 212-2 parallel an den beiden Druckregelventilen 197 und 199 angeschlossen. Diese 4/2-Wege-Ventile haben die Aufgabe, das an ihnen anstehende Drucköl bedarfsweise an einen jeweils zu beaufschlagenden Zylinder freizugeben. Dabei können alle Zylinder in eine gemeinsame Richtung bewegt oder einzeln geschaltet werden. Im Prinzip ist auswählbar, ob nur ein einzelner oder mehrere der Zylinder bewegt werden. Soweit mehrere Zylinder betätigt werden, ist es bei der in Fig. 1 realisierten Schaltung zwingend, dass diese sich in der gleichen Richtung bewegen. Sieht man anstelle der 4/2-Wege-Schaltventile 210-1, 210-2, 212-1 und 212-2 4/4-Wege-Schaltventile vor, die zusätzlich über Kreuz verlaufende Öldurchlässe aufweisen, so ist bei der Bewegung mehrerer Zylinder auch eine derartige Druckbeaufschlagung der Zylinder möglich, dass diese sich in entgegengesetzte Richtungen bewegen. Vorzugsweise ist eine Erfassung der momentanen Stellposition der Schaltstangen über einen jeweiligen Wegsensor 204-1, 204-2, 206-1 bzw. 206-2 vorgesehen.

Die verschiedenen elektrisch angesteuerten Ventile stehen unter der Ansteuerung einer elektronischen Steuereinheit 200. Weitere Einzelheiten der Hydraulikschaltung gemäß Fig. 1 und der Zweck der gezeigten Komponenten ergeben sich für den Fachmann aus den verwendeten Symbolen und den Beschriftungen. Ergänzend wird auf den Inhalt der angesprochenen deutschen Patentanmeldung, Aktenzeichen 103 47 203.7, bzw. auf mit dieser prioritätsmäßig verbundene Patentanmeldungen verwiesen.

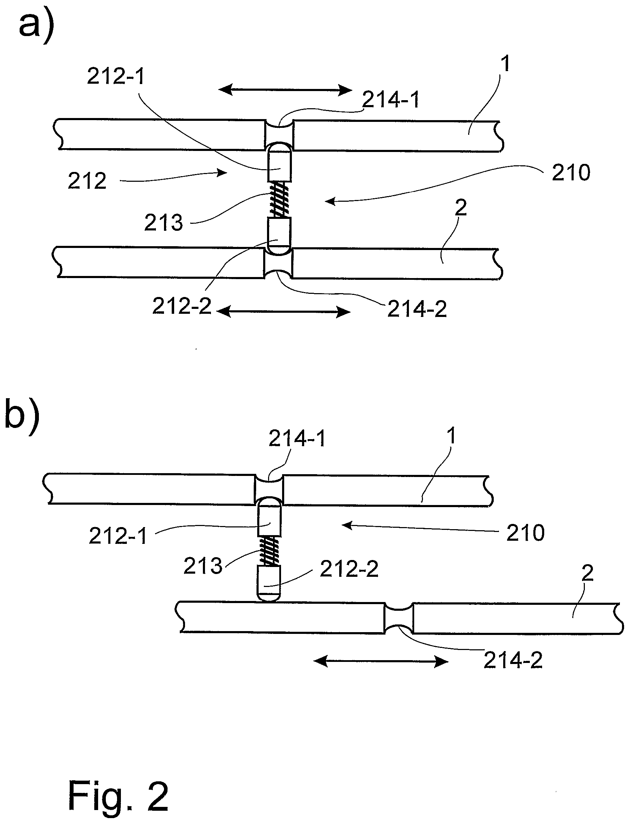

Fig. 2 zeigt zwei nicht beanspruchte Schaltstangen 1 und 2 eines Schaltgetriebes oder eines Teilgetriebes eines Schaltgetriebes, die jeweils zum Ein- und Auslegen von zwei Gängen dienen. Gemäß Fig. 2 nehmen die Schaltstangen 1 und 2 eine Neutralposition ein, in der keiner der den Schaltstangen zugeordneten Gänge eingelegt ist. Durch Verstellen der Schaltstange 1 bzw. 2 axial in die eine oder andere Richtung (gemäß Fig. 2 nach links oder rechts) in eine jeweilige Gang-Eingelegt-Stellung kann ein ausgewählter der beiden der jeweiligen Schaltstange zugeordneten Gänge eingelegt werden.

Um zu verhindern, dass versehentlich oder aufgrund eines technischen Fehlers gleichzeitig zwei Gänge des Schaltgetriebes bzw. des Teilgetriebes eingelegt werden, ist den beiden Schaltstangen 1 und 2 eine Sicherungseinrichtung 210 zugeordnet, die von einer federvorgespannten Stößelanordnung 212 gebildet ist. Die Stößelanordnung 212 umfasst zwei Stößel 212-1 und 212-2 sowie eine dazwischen angeordnete Schraubendruckfeder 213, die durch einen Stiftabschnitt des Stößels 212-1 geführt ist und die beiden Stößel 212-1 und 212-2 gegen den Umfang der Schaltstange 1 bzw. der Schaltstange 2 vorspannt. In der Neutralstellung der jeweiligen Schaltstange greift der Stößel 212-1 bzw. der Stößel 212-2 in eine Umfangsnut 214-1 der Schaltstange 1 bzw. in eine Umfangsnut 214-2 der Schaltstange 2 ein, so dass ein formschlüssiger Eingriff zwischen der Stößelanordnung und der jeweiligen Schaltstange hergestellt ist. Durch eine eine Kraftschwelle überschreitende Betätigungskraft, die auf eine der Schaltstangen in der einen bzw. anderen Verstellrichtung wirkt, kann der formschlüssige Eingriff des betreffenden Stößels in die betreffende Umfangsnut überwunden werden. Die Umfangsfläche der Schaltstange im Bereich der Umfangsnut wirkt dabei als Nockenfläche, die bei der axialen Verstellung der Schaltstange den Stößel in Richtung zur anderen Schaltstange, also in radialer Richtung zur Schaltstange, wegdrückt. Es ist für beide Schaltstangen also jeweils eine Verstellung in beiden axialen Richtungen entsprechend den durch die Doppelpfeile angezeigten Richtungen möglich, um aus der Neutralstellung in eine ausgewählte der beiden Gang-Eingelegt-Stellungen zu verstellen.

Gemäß Teilfigur 2b) nimmt die Schaltstange 2 eine ihrer beiden Gang-Eingelegt-Stellungen ein, während die Schaltstange 1 in der Neutralstellung ist. Der Stößel 212-2 greift dementsprechend nicht in die Nut 214-2 der Schaltstange 2 ein, sondern greift an einem zylindrischen Oberflächenabschnitt der Schaltstange 2 an. Der Stößel 212-2 ist dementsprechend gegenüber seiner Radialstellung gemäß Fig. 2a) in Richtung zur Schaltstange 1 verstellt, wodurch die Feder 213 stärker zusammengedrückt ist. Dies bedeutet, dass der Stößel 212-1 mit größerer Vorspannkraft in die Nut 214-1 der Schaltstange 1 gespannt ist. Bezogen auf gegebene Betätigungskräfte ist deswegen eine Verstellung der Schaltstange 1 aus ihrer Neutralstellung in eine ihrer beiden Gang-Eingelegt-Stellungen nicht möglich. Die Schaltstange 1 ist gemäß Fig. 2b) in der eingenommenen Neutralstellung formschlüssig verriegelt. Die einzige Stellbewegung, die gemäß Fig. 2b) möglich ist, ist eine Verstellung der Schaltstange 2 in Richtung zur Neutralstellung, wie durch den Pfeil angedeutet. Erst wenn die Schaltstange 2 wieder die Neutralstellung einnimmt, kann die Schaltstange 1 aus der Neutralstellung verstellt werden.

Es ist darauf hinzuweisen, dass ausgehend vom Zustand gemäß Fig. 2b) bezogen auf gegebene Betätigungskräfte durch die Sicherungseinrichtung 210 auch eine gleichzeitige Verstellung beider Schaltstangen 1 und 2 aus ihren Neutralstellungen verhindert wird, da die zur Überwindung des formschlüssigen Eingriffs beider Stößel in die Umfangsnuten benötigten Verstellkräfte größer sind als wenn nur auf eine der Schaltstangen Betätigungskräfte im Sinne einer Verstellung aus der Neutralstellung wirken.

Bezug nehmend auf das Ausführungsbeispiel der Fig. 1 können die Schaltstangen des Teilgetriebes 1, die durch die Betätigungszylinder 192-1 und 192-2 betätigbar sind und die Schaltstangen des Teilgetriebes 2, die durch die Betätigungszylinder 194-1 und 194-2 betätigbar sind, jeweils entsprechend den Schaltstangen 1 und 2 ausgeführt und mit einer Sicherungseinrichtung 210 entsprechend Fig. 2, also mit einer Stößelanordnung entsprechend der Stößelanordnung 212, ausgestattet sein. Hierdurch wird die in Bezug auf die Schaltstangen 1 und 2 beschriebene Sicherungsfunktion gegen ein gleichzeitiges Einlegen von zwei Gängen in Bezug auf die Gänge des Teilgetriebes 1 sowie in Bezug auf die Gänge des Teilgetriebes 2 erreicht.

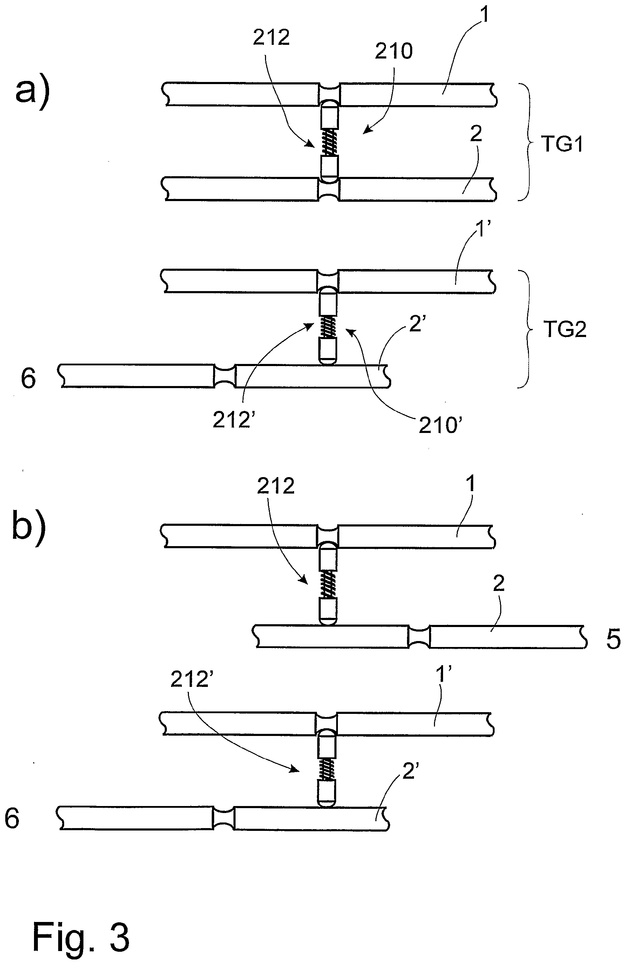

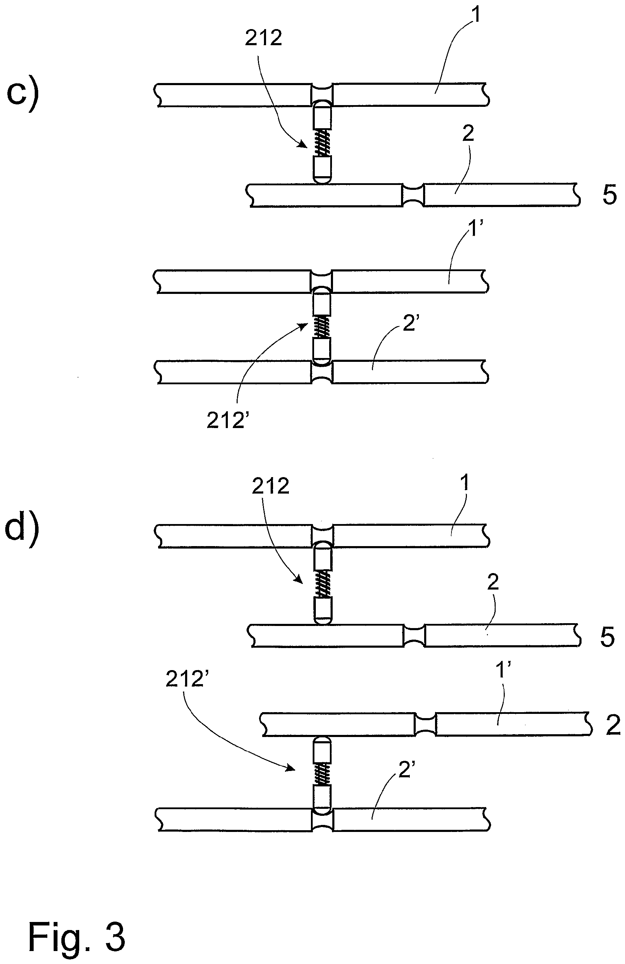

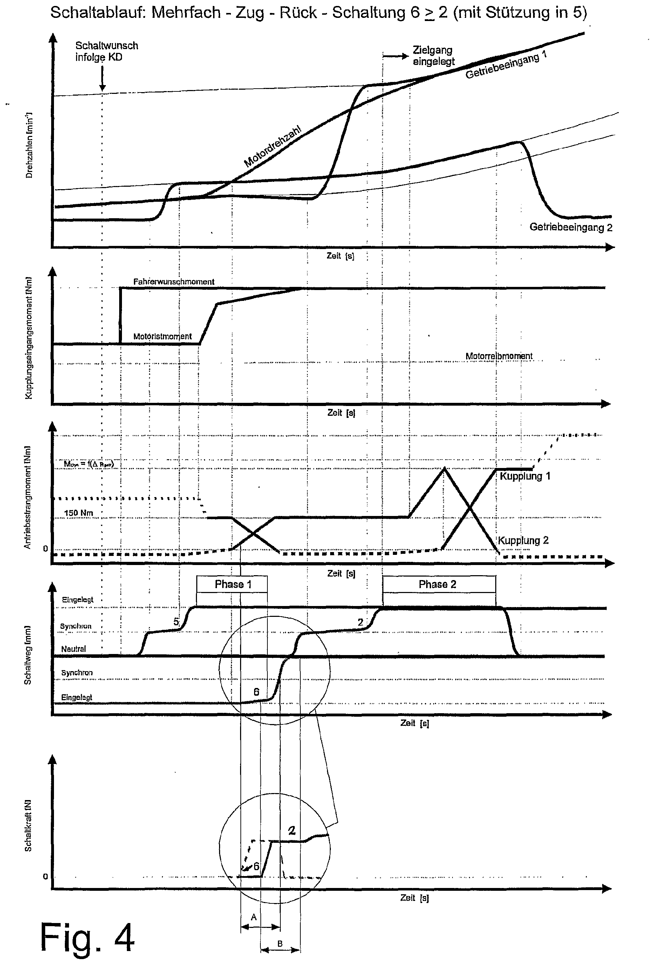

Die nicht beanspruchte Sequenz von Zustand gemäß Fig. 3 bezieht sich betreffend die Zuordnung von Gängen zu den beiden Schaltstangenpaaren zu je zwei Schaltstangen der beiden Teilgetriebe eines Doppelkupplungsgetriebes auf das Ausführungsbeispiel der Fig. 1. Die Schaltstangen 1 und 2 des ersten Teilgetriebes und die Schaltstangen 1' und 2' des zweiten Teilgetriebes sind jeweils entsprechend Fig. 2 ausgestaltet und mit einer Stößelanordnung 212 bzw. 212' ausgestattet, die jeweils eine Sicherungseinrichtung 210 bzw. 210' zur Sicherung gegen das gleichzeitige Einlegen von zwei Gängen auf dem gleichen Teilgetriebe bildet. Fig. 3 zeigt mit den Teilfiguren 3a), 3b), 3c) und 3d) eine Sequenz von Zuständen bei einer Mehrfach-Zug-Rückschaltung vom sechsten auf den zweiten Gang, mit zwischenzeitlicher Stützung auf dem fünften Gang. Fig. 4 zeigt ein Beispiel, wie diese Mehrfach-Zug-Rückschaltung im Detail ausgeführt sein könnte.

Fig. 3a) zeigt den Ausgangszustand. Es ist der sechste Gang auf der Schaltstange 2' des zweiten Teilgetriebes TG2 eingelegt. Wie in Fig. 4 zu erkennen, wird zur Vorbereitung der Mehrfach-Zug-Rückschaltung zuerst der fünfte Gang auf dem anderen Teilgetriebe (TG1) eingelegt (Fig. 3b). Auf dieser Grundlage folgt dann eine erste Überschneidungsschaltungsphase, in der das Antriebsmoment vom sechsten Gang auf den fünften Gang zugkraftunterbrechungsfrei verlagert wird, verbunden mit bzw. gefolgt von einem Auslegen des sechsten Gangs durch Verstellung der Schaltstange 2' in die Neutralstellung (Fig. 3c) und Verstellung der Schaltstange 1' aus der Neutralstellung in die dem zweiten Gang zugeordnete Gang-Eingelegt-Stellung (Fig. 3d). Auf Grundlage der eingelegten Gänge 2 und 5 folgt dann eine zweite Überschneidungsschaltungsphase, in der das Antriebsmoment zugkraftunterbrechungsfrei vom fünften auf den zweiten Gang umgelagert wird.

Mehrfach-Schaltungen sind, jedenfalls wenn eine sportliche Fahrcharakteristik gewünscht ist, als sehr zeitkritisch anzusehen. Bei dem angesprochenen Beispiel der Mehrfach-Zug-Rückschaltung vom sechsten in den zweiten Gang mit Stützung auf den fünften Gang gibt es zwei Phasen, in denen zwei Gänge gleichzeitig eingelegt sind. Dazwischen sollte möglichst schnell auf dem gleichen Teilgetriebe 2 ein Gang ausgelegt (Gang 6) und ein Gang eingelegt (Gang 2) werden.

Die erfindungsgemäße Sicherungseinrichtung, im nicht beanspruchten Beispiel die Stößelanordnung 212 bzw. 212', macht es dabei möglich, dass zum Vorbereiten des Einlegen eines Zielganges schon eine in Richtung der betreffenden Gang-Eingelegt-Stellung wirkende Vorspannkraft durch den betreffenden Schaltaktuator an der dem Zielgang zugeordneten Schaltstange angelegt wird, während der Ausgangsgang auf dem gleichen Teilgetriebe noch eingelegt ist. Die Sicherungseinrichtung verhindert, dass der Zielgang vorzeitig, also vor Auslegen des Ausgangsgangs, eingelegt wird. Erst wenn die dem Ausgangsgang zugeordnete Schaltstange die Neutralstellung erreicht, wird die andere Schaltstange durch die Sicherungseinrichtung freigegeben, sich unter der Wirkung der angelegten Vorspannkraft aus der Neutralstellung in die dem Zielgang zugeordnete Gang-Eingelegt-Stellung zu bewegen. Beim angesprochenen Beispiel der Fig. 3 und 4 ist eine derartige frühe Vorspannung der dem Zielgang 2 zugeordneten Schaltstange 1' ausgenutzt, um die Dauer der Mehrfach-Zug-Rückschaltung zu minimieren. Wie in Fig. 4 zu erkennen, die in den beiden unteren Diagrammen die Schaltwege der Schaltstangen mit Angabe der Stellungen "eingelegt", "synchron", "neutral", "synchron" und "eingelegt" und die Schaltkraftverläufe zum Auslegen des sechsten Gangs bzw. zum Einlegen des zweiten Ganges angibt. Betreffend das Auslegen des sechsten Gangs und das Einlegen des zweiten Gangs sind die beiden eingekreisten Diagrammbereiche von Interesse. Das Einlegen einer Vorspannkraft zum Auslegen des sechsten Gangs erfolgt in dem in Fig. 4 durch den Doppelpfeil A gekennzeichneten Zeitintervall und das Anlegen einer Vorspannkraft zum Einlegen des zweiten Gangs erfolgt in dem in Fig. 4 durch den Doppelpfeil B identifizierten Zeitintervall. Der Zeitpunkt für den Beginn des Auslegens des sechsten Gangs ist durch die Kupplungs-Überschneidungsschaltung bestimmt und hängt von der Kupplungs-Überschneidungszeit ab. Der Zeitpunkt für den Beginn des Einlegens des zweiten Gangs hängt davon ab, wann für den sechsten Gang der Auslegezustand (Neutralzustand) erreicht ist. Der Zeitpunkt des Beginns des Einlegens des zweiten Gangs hängt über den Auslegezustand des sechsten Gangs damit auch von der Kupplungsüberschneidungsschaltung bzw. der Kupplungsüberschneidungszeit ab.

Gemäß Vorstehendem wird während der Kupplungsüberschneidung (Phase 1) der Schaltaktuator zum Auslegen des Ausgangsgangs (im Beispiel der sechste Gang) vorgespannt. Diese Vorspannkraft ist unter anderem abhängig vom Kupplungsstützmoment (übertragenen Kupplungsmoment) und dem auszulegenden Gang zu wählen. Wird die dem Ausgangsgang zugeordnete Kupplung oder Kupplungsanordnung der Doppelkupplung geöffnet, beginnt das Auslegen des Ausgangsgangs an dem Zeitpunkt, an dem die angelegte Auslegekraft größer als die den Gang haltende Haltekraft ist, die sich ihrerseits aus dem anliegenden Kupplungsmoment und bestehender Reibkräfte ergibt. Gleichzeitig oder auch schon vorher kann an der anderen Schaltstange des gleichen Teilgetriebes, die dem Zielgang zugeordnet ist, eine Vorspannkraft in Richtung zu der dem Zielgang zugeordneten Gang-Eingelegt-Stellung angelegt werden. Durch die erfindungsgemäße Sicherungseinrichtung wird der einzulegende Zielgang nicht eingelegt, bevor der Ausgangsgang ausgelegt, die betreffende Schaltstange also die Neutralstellung erreicht hat. Bezug nehmend auf Fig. 3 ist darauf hinzuweisen, dass die Teilfiguren 3c) im Falle des Schaltablaufs gemäß Fig. 4 nur eine Momentenaufnahme repräsentiert, also keinen stationären Zustand. Aufgrund der vorauseilenden Vorspannung der Schaltstange 1' setzt die Bewegung der Schaltstange 1' in Richtung zu der dem fünften Gang zugeordneten Gang-Eingelegt-Stellung quasi im gleichen Augenblick ein, in dem die Schaltstange 2' die Neutralstellung erreicht. Die Bewegung der Schaltstange 2' aus der dem Ausgangsgang 6 zugeordneten Gang-Eingelegt-Stellung in die Neutralstellung und die Bewegung der Schaltstange 1' aus der Neutralstellung in die dem Zielgang 2 zugeordnete Gang-Eingelegt-Stellung erfolgt gewissermaßen in einem Zuge.

Die erfindungsgemäß gegebene Möglichkeit der parallelen Aktivierung der Schaltstangenaktuatorik ermöglicht eine optimale, schnellstmögliche Schaltperformance. Durch die erfindungsgemäße Sicherungseinrichtung, insbesondere eine mechanische Verriegelung der Schaltstangen, wie beim Ausführungsbeispiel, ist das Getriebe bzw. sind die Teilgetriebe dagegen abgesichert, dass gleichzeitig zwei Gänge eingelegt werden. Selbst bei einer fehlerhaften Ansteuerung der dem Zielgang zugeordneten Schaltstange wird das Einlegen des Zielgangs auf dem Teilgetriebe verhindert, so lange noch der Ausgangsgang eingelegt ist.

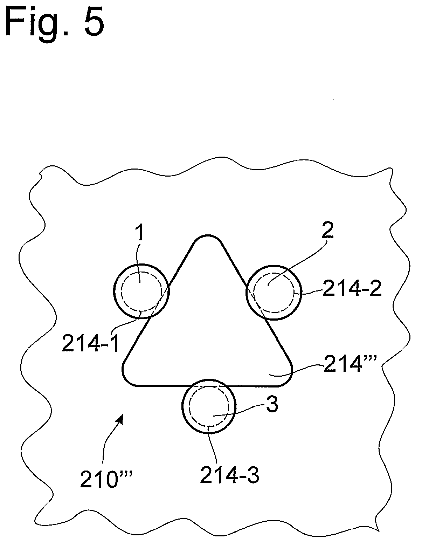

Die nicht beanspruchte Ausführung ist entsprechend auch bei mehr als zwei Schaltstangen aufweisenden Getrieben bzw. Teilgetrieben anwendbar. Fig. 5 zeigt ein Beispiel mit drei Schaltstangen 1, 2 und 3, denen gemeinsam eine Sicherungseinrichtung 210'" in Form eines aus elastischem Material hergestelltem, in der Draufsicht gemäß Fig. 5 näherungsweise dreieckigen Elements zugeordnet ist. Das Element 214'" weist drei Eingriffsränder auf, die jeweils in eine Umfangsnut 214-1, 214-2 bzw. 214-3 der betreffenden Schaltstange 1, 2 bzw. 3 eingreifen, wenn die Schaltstangen sich in der Neutralstellung befinden. Dies ist in Fig. 5 angedeutet. Es kann nun eine der Schaltstangen in eine ihrer Gang-Eingelegt-Stellungen verstellt werden, indem das Element 214'" aus der Umfangsnut der betreffenden Schaltstange durch eine Art Nockenwechselwirkung zwischen der Umfangsfläche der Schaltstange im Bereich der Umfangsnut und dem Rand des Elements 214'" herausgedrückt wird. Hierdurch wird das Element 214' in stärkeren Eingriff in die Umfangsnuten der beiden anderen Schaltstangen gedrückt, so dass diese nun gegen eine Verstellung in eine ihrer Gang-Eingelegt-Stellungen gesichert sind, solange die aus der Neutralstellung verstellte Schaltstange nicht zurück in die Neutralstellung gestellt ist.

Die Ausführung des Sicherungselements bzw. der Sicherungselemente gemäß Fig. 2 bis 5 als eigene Elastizität aufweisende bzw. federvorgespannte Elemente ist nicht zwingend. Durch eine geeignete Dimensionierung können auch in sich völlig steife, starre, also unelastische Elemente, die keiner Vorspannung unterliegen, zur Sicherung eines jeweiligen Schaltelements gegen eine ungewünschte Verstellung aus der Neutralstellung in die oder eine Gang-Eingelegt-Stellung verwendet werden.

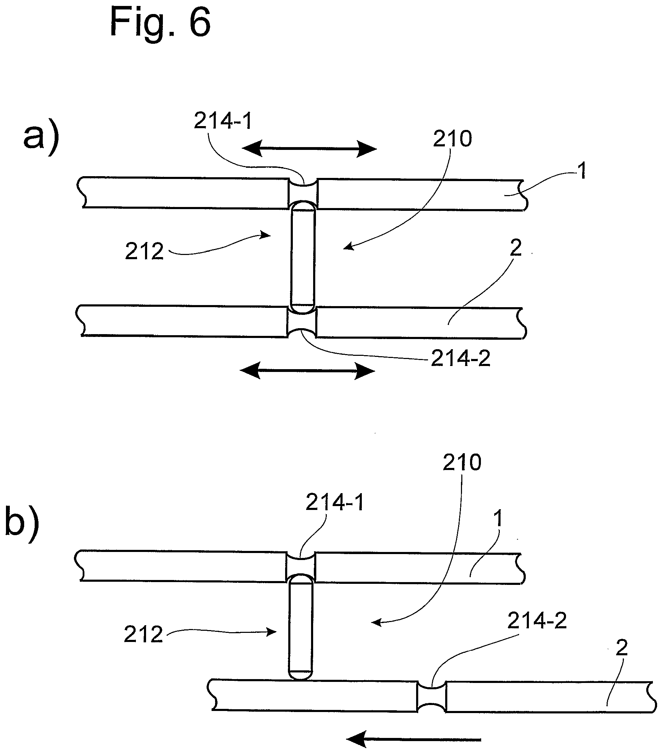

Fig. 6 zeigt eine nicht beanspruchte Lösung, bei der anstelle der Stößelanordnung 212 entsprechend Fig. 2 ein einfacher, starrer Stößel 212 vorgesehen ist, der mit einem jeweiligen Eingriffsende entweder mit der Umfangsnut 214-1 der Schaltstange 1 oder mit der Umfangsnut 214-2 der Schaltstange 2 in Eingriff bringbar ist. Befindet sich der Stößel 212 in einer der Umfangsnuten, so liegt das Ende des anderen Eingriffsendes des Stößels in Bezug auf die andere Schaltstange an einer Stelle, die gerade außerhalb deren Umfangsnut liegt, so dass die andere Schaltstange frei beweglich ist. Im Falle gemäß Fig. 6a) ist die Schaltstange 1 frei beweglich, ohne Behinderung durch das zur Schaltstange 2 entgegengesetzte Eingriffsende des Stößels 212. Auch die Schaltstange, in deren Umfangsnut der Stößel 212 eingreift, im Falle von Fig. 6a) die Schaltstange 2, ist frei beweglich, so lange sich beide Schaltstangen in der Neutralstellung befinden. Eine Bewegung der Schaltstange 2 bedeutet, dass der Stößel 212 durch die Umfangsfläche der Schaltstange im Bereich der Umfangsnut in Richtung zur anderen Schaltstange, gemäß Fig. 6a) zur Schaltstange 1, weg gedrückt wird, wobei die Länge des Stößels gerade so ist, dass der Stößel 212 gerade zwischen die Umfangsfläche der aus der Neutralstellung verschobenen Schaltstange einerseits und die Umfangsfläche innerhalb der Umfangsnut der in der Neutralstellung befindlichen Schaltstange passt, wie dies in Fig. 6b) gezeigt ist. Die Schaltstange 2 ist hier aus der Neutralstellung verstellt und die Schaltstange 1 wird nun durch den Stößel 212 in der Neutralstellung gehalten, da sich der Stößel 212 aufgrund seiner Anlage am Außenumfang der Schaltstange 2 nicht aus der Umfangsnut 214-1 wegdrücken lässt. Stößel entsprechend dem Stößel 212 gemäß Fig. 6 könnten auch im Falle mehrere Schaltstangenpaare entsprechend Fig. 3 anstelle der dort gezeigten Stößelanordnungen 212 und 212' verwendet werden.

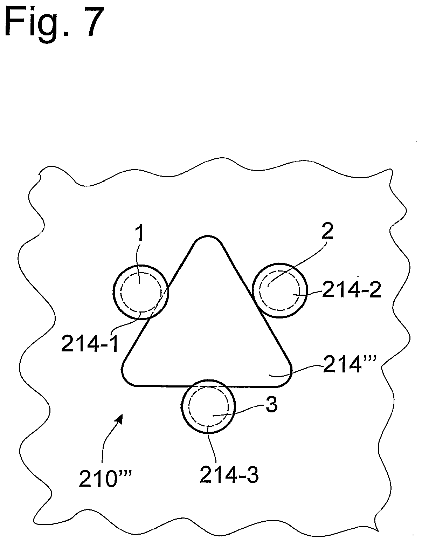

Ein starres, steifes Sicherungselement kommt auch im Falle von mehr als zwei Schaltstangen in Betracht. Fig. 7 zeigt ein entsprechendes nicht beanspruchte Beispiel.

Anstelle des aus elastischem Material hergestellten Elements gemäß Fig. 5 ist ein ähnlich geformtes, aber etwas kleiner dimensioniertes starres Scheibenelement 214'" vorgesehen, das so dimensioniert ist, dass es gerade nicht in die Umfangsnut einer Schaltstange eingreift, wenn es maximal in die Umfangsnuten der beiden anderen Schaltstangen eingreift. Geht man davon aus, dass gemäß Fig. 7 nicht nur die Schaltstangen 1 und 3, sondern auch die Schaltstange 2 sich in der Neutralstellung befinden, so kann eine beliebige der drei Schaltstangen aus der Neutralstellung in eine Gang-Eingelegt-Stellung verschoben werden. Danach sind die noch in der Neutralstellung verbliebenen Schaltstangen durch das Sicherungselement in der Neutralstellung gesichert, da das Sicherungselement nicht ausweichen und dementsprechend nicht aus der jeweiligen Umfangsnut verschoben werden kann. Geht man etwa davon aus, dass gemäß Fig. 7 die Schaltstange 2 in einer Gang-Eingelegt-Stellung ist, so sind die Schaltstangen 1 und 3 gegen eine Verstellung aus der Neutralstellung blockiert.

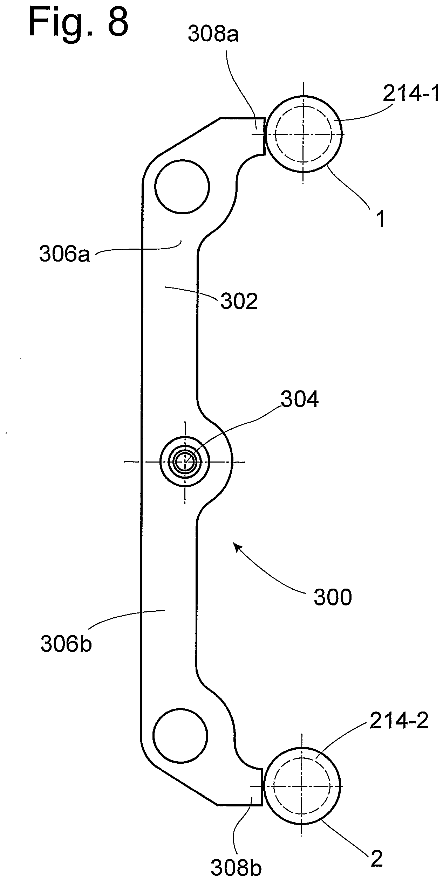

Es sind auch völlig andere Arten von Sicherungselementen und Bewegungsarten für das wenigstens eine jeweilige Sicherungselement denkbar. Fig. 8 zeigt ein beanspruchte Beispiel, bei dem eine Sicherungseinrichtung nach der Erfindung einen zweiarmigen Hebel 302 aufweist, der an einem Schwenklager 304 schwenkbar gelagert ist. Die beiden Hebelarme 306a und 306b weisen jeweils ein Eingriffsende 308a bzw. 308b auf, das mit einer grob tangential in Schwenkrichtung weisenden Eingriffskante ausgeführt ist, die bei in der Neutralstellung befindlichen Schaltstangen 1 und 2 entweder vollständig in die Umfangsnut 214-1 der Schaltstange 1 eingreifen kann (die andere Schaltstange 2 ist dann freigegeben) oder in die Umfangsnut 214-2 der anderen Schaltstange 2 eingreifen kann (die Schaltstange 1 ist dann freigegeben). Gemäß Fig. 8 greift die Eingriffskante des unten dargestellten Hebelarms 306b in die Umfangsnut 214-2 der Schaltstange 2 ein. Die Schaltstange 1 kann dann aus der Neutralstellung verstellt werden. Alternativ könnte auch die Schaltstange 2 aus der Neutralstellung verstellt werden, was mit einem Verschwenken des Doppelarmhebels 302 bis zum vollständigen Eingriff der Eingriffskante des anderen Hebelarms 306a in die Umfangsnut 214-1 der Schaltstange 1 einhergehen würde. Ist eine Schaltstange aus der Neutralstellung verstellt, so ist die andere Schaltstange durch die betreffende Eingriffskante des jeweiligen Hebelarms gegen eine Verstellung aus der Neutralstellung blockiert. Anstelle eines doppelarmigen Hebels kommen auch andersartige Schwenk- oder Wippenelemente in Betracht.

## Patentansprüche

1. Getriebeanordnung für einen Antriebstrang eines Kraftfahrzeugs, ggf. Doppelkupplungs-Getriebeanordnung oder Lastschalt- Getriebeanordnung, mit wenigstens einer Gruppe ((1, 2); (1 , 2), (V, 2'); (1 , 2, 3)) von Schaltelementen, die jeweils zum Ein- und Auslegen wenigstens eines jeweiligen Gangs der Getriebeanordnung durch Verstellung relativ zu einem Getriebeanordnungsgehäuse zwischen wenigstens einer Neutral-Stellung, in dem kein dem Schaltelement zugeordneter Gang eingelegt ist, und wenigstens einer Gang- Eingelegt-Stellung, in der ein dem Schaltelement und der Gang- Eingelegt-Stellung zugeordneter Gang eingelegt ist, betätigbar sind, wobei wenigstens eine den Schaltelementen (1 , 2; 1', 2¹; 1 , 2, 3) der bzw. einer Gruppe gemeinsam zugeordnete Sicherungseinrichtung (210; 210'; 210"'; 300), vorgesehen ist, die einen Freigabezustand einnimmt, wenn sich alle Schaltelemente in der jeweiligen Neutralstellung befinden, und die durch Verstellung eines der Schaltelemente in die oder eine Gang-Eingelegt-Stellung aus dem Freigabezustand in einen Sicherungszustand überführbar ist, in welchem die Sicherungseinrichtung das andere oder alle anderen Schaltelemente gegen ein Verstellen aus der Neutralstellung in die oder eine Gang-Eingelegt-Stellung sichert, **gekennzeichnet durch** wenigstens zwei unabhängig voneinander betätigbare Gruppen von Schaltelementen, wobei die Sicherungseinrichtung (210; 210"'; 300) wenigstens ein Sicherungselement (212; 214'"; 302) aufweist, welches derart beweglich gelagert und dimensioniert ist, dass es bei in der Neutralstellung befindlichen Schaltelementen mit wenigstens einem der Schaltelemente in Halteeingriff steht oder bringbar ist und ein beliebiges der Schaltelemente aus der Neutralstellung in die Gang-Eingelegt-Stellung oder eine Gang-Eingelegt-Stellung verstellbar ist, wobei das Sicherungselement bei Verstellung eines jeden der Schaltelemente aus der Neutralstellung in die Gang- Eingelegt-Stellung oder eine Gang-Eingelegt-Stellung durch das aus der Neutralstellung verstellte in Halteeingriff mit dem anderen Schaltelement bzw. mit den anderen Schaltelementen gebracht wird und das Sicherungselement (302) bei in der Neutralstellung befindlichen Schaltelementen zwischen einem Halteeingriff mit einem ersten und einem Halteeingriff mit einem zweiten der Schaltelemente verschwenkbar ist.

2. Getriebeanordnung nach Anspruch 1, **dadurch gekennzeichnet, dass** die Sicherungseinrichtung (210; 210'; 210"'; 300) im Freigabezustand die zugeordneten Schaltelemente (1, 2; 1', 2'; 1 , 2, 3) für eine Verstellung aus der Neutralstellung in die oder eine Gang-Eingelegt- Stellung freigibt.

3. Getriebeanordnung nach Anspruch 1, **dadurch gekennzeichnet, dass** die Sicherungseinrichtung (210; 210'; 210'"; 300) im Freigabezustand die zugeordneten Schaltelemente (1 , 2; 1', 2¹; 1 , 2, 3) für eine Verstellung aus der Neutralstellung in die oder eine Gang-Eingelegt- Stellung derart freigibt, dass nur eines der Schaltelemente in die bzw. eine Gang-Eingelegt-Stellung verstellbar ist.

4. Getriebeanordnung nach einem der Ansprüche 1 bis 3, **dadurch gekennzeichnet, dass** in dem Verrieglungszustand das andere oder alle anderen Schaltelemente bezogen auf eine gegebene maximale Betätigungskraft gegen ein Verstellen aus der Neutralstellung in die oder eine Gang-Eingelegt-Stellung gehalten, vorzugsweise verriegelt sind.

5. Getriebeanordnung nach einem der Ansprüche 1 bis 4, dass die Sicherungseinrichtung (210; 210'; 210"'; 300) im Freigabezustand die zugeordneten Schaltelemente (1, 2; V, 2'; 1 , 2, 3) gegen ein Verstellen aus der Neutralstellung in die oder eine Gang-Eingelegt- Stellung auf Grundlage einer eine minimale Betätigungskraft unterschreitenden Betätigungskraft sichert.

6. Getriebeanordnung nach Anspruch 5, **dadurch gekennzeichnet, dass** in dem Freigabezustand alle zugeordneten Schaltelemente (1 , 2; 1', 2'; 1 , 2, 3) bezogen auf eine die minimale Betätigungskraft unterschreitende Betätigungskraft gegen ein Verstellen aus der Neutralstellung in die oder eine Gang-Eingelegt-Stellung gehalten, vorzugsweise verriegelt sind.

7. Getriebeanordnung nach Anspruch 6, rückbezogen auf Anspruch 4, **dadurch gekennzeichnet, dass** in dem Freigabezustand die Verriegelung eines jeweiligen zugeordneten Schaltelements durch Anlegen der minimalen Betätigungskraft oder einer demgegenüber größeren Betätigungskraft aufhebbar ist.

8. Getriebeanordnung nach einem der Ansprüche 1 bis 7, **dadurch gekennzeichnet, dass** durch Verstellen eines der Schaltelemente (1 , 2; 1¹, 2'; 1 , 2, 3) von der Neutralstellung in die oder eine Gang- Eingelegt-Stellung eine auf das andere bzw. die anderen Schaltelemente wirkende, diese(s) in der Neutralstellung haltende Haltekraft einschaltbar oder vergrößerbar ist.

9. Getriebeanordnung nach einem der vorangehenden Ansprüche, **dadurch gekennzeichnet, dass** der Halteeingriff ein Formschluss-Eingriff zwischen einem Eingriffsabschnitt, etwa Eingriffsende, des Sicherungselements (212; 214"'; 302), und einem Eingriffsabschnitt, etwa Einbuchtung in einer Fläche, des jeweiligen Schaltelements, ist.

10. Getriebeanordnung nach einem der vorangehenden Ansprüche, **dadurch gekennzeichnet, dass** bei in der Neutralstellung befindlichen Schaltelementen der Halteeingriff des wenigtens einen Sicherungselements (212; 214"'; 302) mit einem jeweiligen Schaltelement ein ungesicherter, durch Verstellung des Schaltelements in Richtung zu der Gang-Eingelegt-Stellung oder einer Gang-Eingelegt-Stellung überwindbarer Eingriff ist, und dass bei einem aus der Neutralstellung in die Gang-Eingelegt-Stellung oder eine Gang-Eingelegt-Stellung verstellten Schaltelement der Halteeingriff des wenigtens einen Sicherungselements (212; 214"'; 302) mit dem anderen Schaltelement bzw. den anderen Schaltelementen ein durch das aus der Neutralstellung verstellte Schaltelement gesicherter, zumindest auf Grundlage gegebener Betätigungskräfte nicht überwindbarer Eingriff ist.

11. Getriebeanordnung nach einem der Ansprüche 1 bis 10, **dadurch gekennzeichnet, dass** an einem sich in der Neutralstellung befindenden Schaltelement der Gruppe eine Gangeinlege- Betätigungskraft anlegbar ist, während das andere oder ein anderes Schaltelement der Gruppe sich in der oder einer Gang-Eingelegt- Stellung befindet, wobei die Sicherungseinrichtung (210; 210'; 210"'; 300) das eine Schaltelement entgegen der angelegten Gangeinlege- Betätigungskraft in der Neutralstellung hält, und dass durch Verstellen des anderen Schaltelements aus der Gang-Eingelegt-Stellung in die Neutralstellung unter der Wirkung einer angelegten Gangausiege- Betätigungskraft die Sicherungseinrichtung (210; 210'; 210'"; 300) in den Freigabezustand überführbar ist, um das eine Schaltelement unter der Wirkung der angelegten Gangeinlege-Betätigungskraft aus der Neutralstellung in die oder eine Gang-Eingelegt-Stellung zu verstellen.

12. Getriebeanordnung nach einem der Ansprüche 1 bis 11, **dadurch gekennzeichnet, dass** die Schaltelemente als Schaltstangen (1 , 2,; 1', 2'; 1 , 2, 3) ausgeführt sind.

13. Getriebeanordnung nach einem der Ansprüche 1 bis 12, **dadurch gekennzeichnet, dass** die (jeweilige) Gruppe zwei Schaltelemente (1 , 2; 1', 2') aufweist.

14. Getriebeanordnung nach einem der Ansprüche 1 bis 13, **dadurch gekennzeichnet, dass** die Geweilige) Gruppe mehr als zwei Schaltelemente aufweist.

## Claims

1. Transmission arrangement for a drive train of a motor vehicle, possibly double clutch transmission arrangement or powershift transmission arrangement, with at least one group ((1, 2); (1, 2), (V, 2'); (1, 2, 3)) of shifting elements which can be actuated in each case for engaging and disengaging at least one respective gear of the transmission arrangement by way of adjustment relative to a transmission arrangement housing between at least one neutral position, in which no gear which is assigned to the shifting element is engaged, and at least one gear-engaged position, in which a gear which is assigned to the shifting element and the gear-engaged position is engaged, at least one securing device (210; 210'; 210'''; 300) which is assigned jointly to the shifting elements (1, 2; 1', 2'; 1, 2, 3) of the or a group being provided, which at least one securing device (210; 210'; 210'''; 300) assumes a release state when all the shifting elements are situated in the respective neutral position, and which can be transferred out of the release state into a securing state by way of adjustment of one of the shifting elements into the or a gear-engaged position, in which securing state the securing device secures the other or all other shifting elements against an adjustment out of the neutral position into the or a gear-engaged position, **characterized by** at least two groups of shifting elements which can be actuated independently of one another, the securing device (210; 210'''; 300) having at least one securing element (212; 214'''; 302) which is mounted movably and is dimensioned in such a way that, in the case of shifting elements which are situated in the neutral position, it is in holding engagement or can be moved into holding engagement with at least one of the shifting elements, and any desired one of the shifting elements can be adjusted out of the neutral position into the gear-engaged position or a gear-engaged position, the securing element being brought, by way of that shifting element which is adjusted out of the neutral position, into holding engagement with the other shifting element or with the other shifting elements in the case of an adjustment of each one of the shifting elements out of the neutral position into the gear-engaged position or a gear-engaged position, and it being possible, in the case of shifting elements which are situated in the neutral position, for the securing element (302) to be pivoted between a holding engagement with a first one of the shifting elements and a holding engagement with the second one of the shifting elements.

2. Transmission arrangement according to Claim 1, **characterized in that**, in the release state, the securing device (210; 210'; 210'''; 300) releases the associated shifting elements (1, 2; 1', 2'; 1, 2, 3) for an adjustment out of the neutral position into the or a gear-engaged position.

3. Transmission arrangement according to Claim 1, **characterized in that**, in the release state, the securing device (210; 210'; 210'''; 300) releases the associated shifting elements (1, 2; 1', 2'; 1, 2, 3) for an adjustment out of the neutral position into the or a gear-engaged position in such a way that only one of the shifting elements can be adjusted into the or a gear-engaged position.

4. Transmission arrangement according to one of Claims 1 to 3, **characterized in that**, in the locking state, the other shifting element or all other shifting elements are held, and are preferably locked, against an adjustment out of the neutral position into the or a gear-engaged position in relation to a given maximum actuating force.

5. Transmission arrangement according to one of Claims 1 to 4, **characterized in that**, in the release state, the securing device (210; 210'; 210'''; 300) secures the associated shifting elements (1, 2; V, 2'; 1, 2, 3) against an adjustment out of the neutral position into the or a gear-engaged position on the basis of an actuating force which undershoots a minimum actuating force.

6. Transmission arrangement according to Claim 5, **characterized in that**, in the release state, all the associated shifting elements (1, 2; 1', 2'; 1, 2, 3) are held, and are preferably locked, against an adjustment out of the neutral position into the or a gear-engaged position in relation to an actuating force which undershoots the minimum actuating force.

7. Transmission arrangement according to Claim 6, referring back to Claim 4, **characterized in that**, in the release state, the locking action of a respective associated shifting element can be cancelled by way of application of the minimum actuating force or an actuating force which is greater in comparison.

8. Transmission arrangement according to one of Claims 1 to 7, **characterized in that** the holding force which acts on the other shifting element or the other shifting elements and holds it/them in the neutral position can be switched on or can be increased by way of adjustment of one of the shifting elements (1, 2; 1', 2'; 1, 2, 3) from the neutral position into the or a gear-engaged position.

9. Transmission arrangement according to one of the preceding claims, **characterized in that** the holding engagement is a positively locking engagement between an engagement section, for instance an engagement end, of the securing element (212; 214'''; 302), and an engagement section, for instance an indentation in a surface, of the respective shifting element.

10. Transmission arrangement according to one of the preceding claims, **characterized in that**, in the case of shifting elements which are situated in the neutral position, the holding engagement of the at least one securing element (212; 214'''; 302) with a respective shifting element is an unsecured engagement which can be overcome by way of adjustment of the shifting element in the direction of the gear-engaged position or a gear-engaged position, and **in that**, in the case of a shifting element which is adjusted out of the neutral position into the gear-engaged position or a gear-engaged position, the holding engagement of the at least one securing element (212; 214'''; 302) with the other shifting element or the other shifting elements is an engagement which is secured by way of the shifting element which is adjusted out of the neutral position, and cannot be overcome at least on the basis of given actuating forces.

11. Transmission arrangement according to one of Claims 1 to 10, **characterized in that** a gear-engagement actuating force can be applied to a shifting element of the group, which shifting element is situated in the neutral position, whereas the other shifting element or another shifting element of the group is situated in the or a gear-engaged position, the securing device (210; 210'; 210'''; 300) holding the one shifting element in the neutral position counter to the applied gear-engagement actuating force, and **in that** the securing device (210; 210'; 210'''; 300) can be transferred into the release state by way of adjustment of the other shifting element out of the gear-engaged position into the neutral position under the action of an applied gear-disengagement actuating force, in order to adjust the one shifting element out of the neutral position into the or a gear-engaged position under the action of the applied gear-engagement actuating force.

12. Transmission arrangement according to one of Claims 1 to 11, **characterized in that** the shifting elements are configured as selector rods (1, 2; 1', 2'; 1, 2, 3).

13. Transmission arrangement according to one of Claims 1 to 12, **characterized in that** the (respective) group has two shifting elements (1, 2; 1', 2').

14. Transmission arrangement according to one of Claims 1 to 13, **characterized in that** the (respective) group has more than two shifting elements.

## Revendications

1. Ensemble de transmission pour une chaîne cinématique d'un véhicule automobile, éventuellement un ensemble de transmission à double embrayage ou un ensemble de transmission commandé sous charge, comprenant au moins un groupe ((1, 2) ; (1, 2), (V, 2') ; (1, 2, 3)) d'éléments de changement de vitesse qui peuvent être actionnés respectivement pour engager et désengager au moins une vitesse respective de l'ensemble de transmission par un déplacement par rapport à un carter d'ensemble de transmission entre au moins une position neutre, dans laquelle aucune vitesse associée à l'élément de changement de vitesse n'est engagée, et au moins une position de vitesse engagée, dans laquelle une vitesse associée à l'élément de changement de vitesse et à la position de vitesse engagée est engagée, dans lequel au moins un dispositif de blocage (210 ; 210' ; 210'" ; 300) associé en commun aux éléments de changement de vitesse (1, 2 ; 1', 2¹ ; 1, 2, 3) du ou d'un groupe est prévu qui adopte un état de libération quand tous les éléments de changement de vitesse se trouvent dans la position neutre respective et qui peut être transféré de l'état libéré à un état de blocage par le déplacement d'un des éléments de changement de vitesse dans la ou dans une position de vitesse engagée, dans lequel le dispositif de blocage bloque l'autre ou tous les autres éléments de changement de vitesse contre un déplacement de la position neutre à la ou une position de vitesse engagée, **caractérisé par** au moins deux groupes d'éléments de changement de vitesse pouvant être actionnés indépendamment l'un de l'autre, dans lequel le dispositif de blocage (210 ; 210'" ' ; 300) présente au moins un élément de blocage (212 ; 214'" ; 302) qui est monté mobile et dimensionné de telle sorte que lorsque les éléments de changement de vitesse se trouvent dans la position neutre, il est ou peut être mis en prise de maintien avec au moins l'un des éléments de changement de vitesse, et l'un quelconque des éléments de changement de vitesse peut être déplacé de la position neutre dans la position de vitesse engagée ou une position de vitesse engagée, dans lequel l'élément de blocage, en cas de déplacement de chacun des éléments de changement de vitesse de la position neutre à la position de vitesse engagée ou à une position de vitesse engagée, est amené par celui déplacé à partir de la position neutre en prise de maintien avec l'autre élément de changement de vitesse ou avec les autres éléments de changement de vitesse, et l'élément de blocage (302), lorsque les éléments de changement de vitesse se trouvent dans la position neutre, peut pivoter entre une prise de maintien avec un premier et une prise de maintien avec un deuxième des éléments de changement de vitesse.

2. Ensemble de transmission selon la revendication 1, **caractérisé en ce que** le dispositif de blocage (210 ; 210' ; 210'" ' ; 300) à l'état de libération libère les éléments de changement de vitesse associés (1, 2 ; 1', 2' ; 1, 2, 3) pour un déplacement de la position neutre à la ou à une position de vitesse engagée.

3. Ensemble de transmission selon la revendication 1, **caractérisé en ce que** le dispositif de blocage (210 ; 210' ; 210'" ' ; 300) à l'état de libération libère les éléments de changement de vitesse associés (1, 2 ; 1', 2¹ ; 1, 2, 3) pour un déplacement de la position neutre à la ou à une position de vitesse engagée de telle sorte qu'un seul des éléments de changement de vitesse peut être déplacé dans la ou dans une position de vitesse engagée.

4. Ensemble de transmission selon l'une quelconque des revendications 1 à 3, **caractérisé en ce qu'**à l'état de verrouillage, l'autre élément ou tous les autres éléments de changement de vitesse est/sont maintenu(s), de préférence verrouillé(e), concernant une force d'actionnement maximale donnée, contre un déplacement de la position neutre à la ou à une position de vitesse engagée.

5. Ensemble de transmission selon l'une quelconque des revendications 1 à 4, **caractérisé en ce que** le dispositif de blocage (210 ; 210' ; 210''' ; 300), à l'état de libération, bloque les éléments de changement de vitesse associés (1, 2 ; V, 2' ; 1, 2, 3) contre un déplacement de la position neutre à la ou à une position de vitesse engagée sur la base d'une force d'actionnement inférieure à une force d'actionnement minimale.

6. Ensemble de transmission selon la revendication 5, **caractérisé en ce qu'**à l'état de libération, tous les éléments de changement de vitesse associés (1, 2 ; 1', 2' ; 1, 2, 3) sont maintenus, de préférence verrouillés, concernant une force d'actionnement inférieure à la force d'actionnement minimale contre un déplacement de la position neutre à la ou à une position de vitesse engagée.

7. Ensemble de transmission selon la revendication 6 lorsqu'elle dépend de la revendication 4, **caractérisé en ce qu'**à l'état de libération, le verrouillage d'un élément de changement de vitesse associé respectif peut être neutralisé par l'application de la force d'actionnement minimale ou d'une force d'actionnement supérieure à celle-ci.

8. Ensemble de transmission selon l'une quelconque des revendications 1 à 7, **caractérisé en ce que** le déplacement d'un des éléments de changement de vitesse (1, 2 ; 1¹, 2' ; 1, 2, 3) de la position neutre à la ou à une position de vitesse engagée permet d'activer ou d'augmenter une force de maintien agissant sur l'autre ou sur les autres éléments de changement de vitesse qui le(s) maintient dans la position neutre.

9. Ensemble de transmission selon l'une quelconque des revendications précédentes, **caractérisé en ce que** la prise de maintien est une prise par complémentarité de forme entre une partie de mise en prise, par exemple une extrémité de mise en prise, de l'élément de blocage (212 ; 214''' ; 302), et une partie de mise en prise, par exemple un creux dans une surface, de l'élément de changement de vitesse respectif.

10. Ensemble de transmission selon l'une quelconque des revendications précédentes, **caractérisé en ce que**, lorsque les éléments de changement de vitesse se trouvent dans la position neutre, la prise de maintien dudit au moins un élément de blocage (212 ; 214''' ; 302) avec un élément de changement de vitesse respectif est une prise non bloquée pouvant être surmontée par un déplacement de l'élément de changement de vitesse en direction de la position de vitesse engagée ou d'une position de vitesse engagée, et **en ce que**, dans le cas d'un élément de changement de vitesse déplacé de la position neutre à la position de vitesse engagée ou à une position de vitesse engagée, la prise de maintien dudit au moins un élément de blocage (212 ; 214''' ; 302) avec l'autre élément de changement de vitesse ou les autres éléments de changement de vitesse est une prise bloquée par l'élément de changement de vitesse déplacé à partir de la position neutre et qui ne peut pas être surmontée, du moins pas sur la base des forces d'actionnement données.

11. Ensemble de transmission selon l'une quelconque des revendications 1 à 10, **caractérisé en ce qu'**une force d'actionnement d'engagement de vitesse peut être appliquée au niveau d'un élément de changement de vitesse se trouvant dans la positon neutre du groupe, alors que l'autre ou un autre élément de changement de vitesse du groupe se trouve dans la ou dans une position de vitesse engagée dans laquelle le dispositif de blocage (210 ; 210' ; 210''' ; 300) maintient ledit un élément de changement de vitesse dans la position neutre contre la force d'actionnement d'engagement de vitesse appliquée, et **en ce que** le déplacement de l'autre élément de changement de vitesse de la position de vitesse engagée à la position neutre sous l'effet d'une force d'actionnement de déclenchement de vitesse appliquée permet de transférer le dispositif de blocage (210 ; 210' ; 210''' ; 300) à l'état de libération afin de déplacer ledit un élément de changement de vitesse sous l'effet de la force d'actionnement d'engagement de vitesse appliquée de la position neutre à la ou à une position de vitesse engagée.

12. Ensemble de transmission selon l'une quelconque des revendications 1 à 11, **caractérisé en ce que** les éléments de changement de vitesse sont réalisés sous la forme de tringles de changement de vitesse (1, 2 ; 1', 2' ; 1, 2, 3) .

13. Ensemble de transmission selon l'une quelconque des revendications 1 à 12, **caractérisé en ce que** le groupe (respectif) présente deux éléments de changement de vitesse (1, 2 ; 1', 2').

14. Ensemble de transmission selon l'une quelconque des revendications 1 à 13, **caractérisé en ce que** le groupe (respectif) présente plus de deux éléments de changement de vitesse.
